(19) Europäisches Patentamt
European Patent Office
Office européen des brevets

(11) **EP 4 361 215 A1**

(12) **EUROPEAN PATENT APPLICATION**
published in accordance with Art. 153(4) EPC

(43) Date of publication:
**01.05.2024  Bulletin 2024/18**

(21) Application number: **22828488.1**

(22) Date of filing: **23.06.2022**

(51) International Patent Classification (IPC):
**C08L 23/16** (2006.01)    **C08L 23/10** (2006.01)

(52) Cooperative Patent Classification (CPC):
**C08L 23/10; C08L 23/16**

(86) International application number:
**PCT/JP2022/025043**

(87) International publication number:
**WO 2022/270572 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.06.2021  JP 2021104886**

(71) Applicant: **Mitsui Chemicals, Inc.
Tokyo 104-0028 (JP)**

(72) Inventors:
• **TAKAYAMA, Nana
Sodegaura-shi, Chiba 299-0265 (JP)**

• **NAKANO, Hidetake
Sodegaura-shi, Chiba 299-0265 (JP)**
• **KANEHARA, Takeshi
Sodegaura-shi, Chiba 299-0265 (JP)**
• **KITAHARA, Yasuhiro
Sodegaura-shi, Chiba 299-0265 (JP)**
• **KUSUMOTO, Remi
Sodegaura-shi, Chiba 299-0265 (JP)**

(74) Representative: **Hoffmann Eitle
Patent- und Rechtsanwälte PartmbB
Arabellastraße 30
81925 München (DE)**

(54) **THERMOPLASTIC ELASTOMER COMPOSITION, MOLDED BODY THEREOF, AND USE THEREOF**

(57)    An object is to provide a highly transparent thermoplastic elastomer composition and a molded article thereof, capable of being suitably used for applications such as interior skin materials without impairing appearance (designability such as emboss moldability) and moldability that conventional interior skin materials have. A thermoplastic elastomer composition, including 100 parts by mass of an ethylene·α-olefin·non-conjugated polyene copolymer (A), 20 to 5,000 parts by mass of a soft propylene-based copolymer (B), a melting point ($Tm_B$) of which is not observed or is lower than 115°C, 10 to 500 parts by mass of a crystalline polyolefin (C), a melting point ($Tm_C$) of which is 115°C or higher, 0 to 70 parts by mass of a softener (D), and 0.01 to 10 parts by mass of a crosslinking agent (E), in which the soft propylene-based copolymer (B) further satisfies the following requirements (b-1) and (b-2):
(b-1) 90 to 50 mol% of a constituent unit derived from propylene, 0 to 30 mol% of a constituent unit derived from 1-butene, and 5 to 30 mol% of a constituent unit derived from ethylene, are contained;
(b-2) a molecular weight distribution (Mw/Mn) obtained by gel permeation chromatography (GPC) is in a range of 1.0 to 3.5.

Processed by Luminess, 75001 PARIS (FR)

**Description**

Technical Field

The present invention relates to a thermoplastic elastomer composition, a molded article thereof, and use thereof.

Background Art

In automobile cabins, for example, interior skin materials such as decorative panels that exhibit leather-like appearances are sometimes used to create a sense of luxury. Furthermore, in recent automobiles, various display devices and functional components are installed in an instrument panel of a driver's seat. For example, a wide variety of display devices and operation units, such as a conventional speedometer, a tachometer, and a fuel level meter, as instruments, switches for air conditioning, window open/close, and door lock, for example, a display section and an operation unit of a car navigation system, an external monitor, lighting and decorative sections, for example, are installed.

When a display device or an operation unit is installed below an interior skin material, the interior skin material is required to be transparent to the extent that display projected on a decorative panel can be seen when a light source of the display device or operation unit emits light, whereas high designability (for example, a sense of luxury) is required when the light source is not emitting light (non-emitting light).

Patent Literature 1 discloses, as a weatherstrip application, a thermoplastic elastomer composition including 10 to 60 parts by weight of a non-crosslinkable crystalline polyolefin resin (A), 1 to 20 parts by weight of a propylene·1-butene·ethylene random copolymer (B), 89 to 20 parts by weight of a partially or fully crosslinked ethylene-$\alpha$-olefin·non-conjugated polyene copolymer rubber (C) composed of ethylene, an $\alpha$-olefin having 3 to 20 carbon atoms, and a non-conjugated polyene, and a softener (D).

Patent Literature 2 discloses a thermoplastic resin composition with low viscosity and excellent moldability, including a thermoplastic elastomer resin (A), a polyolefinic resin (B), a polypropylene-based resin (C), and oil (D).

Patent Literature 3 discloses a thermoplastic elastomer composition in which 1 to 98 parts by weight of an isotactic polypropylene (A), 2 to 99 parts by weight of a propylene·ethylene (·$\alpha$-olefin) random copolymer (B) including 45 to 89 mol% of a propylene component, 10 to 25 mol% of an ethylene component, and 0 to 30 mol% of a component unit derived from an $\alpha$-olefin having 4 to 20 carbon atoms, if necessary, and 2 to 1,900 parts by weight of an ethylene·$\alpha$-olefin-non-conjugated polyene copolymer rubber (C), are mixed and crosslinked.

Citation List

Patent Literature

[Patent Literature 1] JP2009-215356A
[Patent Literature 2] WO2018-147391
[Patent Literature 3] JP2009-73912A

Summary of Invention

Technical Problem

The thermoplastic elastomer compositions described in Patent Literatures 1 to 3 described above have not achieved transparency and high designability simultaneously. Moreover, transparency has been found to be further required in an interior skin material used for the above conventional display devices. The present inventors have also found as a result of investigations that in the case of using an olefinic thermoplastic elastomer as an interior skin material (in particular for a display device and a decorative panel), refraction of light occurs due to a refractive index difference of components in a composition, whereby conventional interior skin materials cannot achieve sufficient transparency.

An object of the present invention is to provide a highly transparent thermoplastic elastomer composition and a molded article thereof, capable of being suitably used for applications such as interior skin materials, without impairing appearance (designability such as emboss moldability) and moldability that conventional interior skin materials have.

Solution to Problem

The present inventors have conducted diligent investigations in order to solve the aforementioned problem. As a result, the present inventors have found that a thermoplastic elastomer composition having the following configuration can solve the aforementioned problems and thus have completed the present invention. The present invention relates, for example, to [1] to [8] below:

[1] A thermoplastic elastomer composition, comprising:

100 parts by mass of an ethylene·$\alpha$-olefin·non-conjugated polyene copolymer (A);
10 to 5,000 parts by mass of a soft propylene-based copolymer (B), a melting point ($Tm_B$) of which is not observed or is lower than 115°C;
10 to 500 parts by mass of a crystalline polyolefin (C), a melting point ($Tm_C$) of which is 115°C or higher;
0 to 200 parts by mass of a softener (D); and
0.01 to 10 parts by mass of a crosslinking agent (E).

[2] The thermoplastic elastomer composition according to [1], wherein the soft propylene-based copolymer (B) further satisfies the following requirements (b-1) and (b-2):

(b-1) 90 to 50 mol% of a constituent unit derived from propylene, 0 to 30 mol% of a constituent unit derived from 1-butene, and 5 to 30 mol% of a constituent unit derived from ethylene, are contained;
(b-2) a molecular weight distribution (Mw/Mn) obtained by gel permeation chromatography (GPC) is in a range of 1.0 to 3.5.

[3] A thermoplastic elastomer composition, obtained by dynamic crosslinking

100 parts by mass of an ethylene·$\alpha$-olefin·non-conjugated polyene copolymer (A),
10 to 5,000 parts by mass of a soft propylene-based copolymer (B), a melting point ($Tm_B$) of which is not observed or is lower than 115°C,
10 to 500 parts by mass of a crystalline polyolefin (C), a melting point ($Tm_C$) of which is 115°C or higher,
0 to 200 parts by mass of a softener (D), and
0.01 to 10 parts by mass of a crosslinking agent (E).

[4] The thermoplastic elastomer composition according to [3], wherein the ethylene·$\alpha$-olefin·non-conjugated polyene copolymer (A) is at least partially crosslinked.
[5] The thermoplastic elastomer composition according to [3] or [4], wherein a Shore A hardness (instantaneous value) (in accordance with the measurement method of JIS K 6253, using 3 sheets each having a thickness of 2 mm stacked on top of each other) is 40 to 100.
[6] A molded article comprising the thermoplastic elastomer composition according to any one of [1] to [5].
[7] The molded article according to [6], being an automobile interior skin material.
[8] The molded article according to [7], wherein the automobile interior skin material is an instrument panel, a door trim, an armrest or a console.

Preferably, the present invention relates to, for example, the following <<1>> to <<14>>.

<<1>> A thermoplastic elastomer composition, comprising:

100 parts by mass of an ethylene·$\alpha$-olefin·non-conjugated polyene copolymer (A);
20 to 5,000 parts by mass of a soft propylene-based copolymer (B), a melting point ($Tm_B$) of which is not observed or is lower than 115°C;
10 to 500 parts by mass of a crystalline polyolefin (C), a melting point ($Tm_C$) of which is 115°C or higher;
0 to 70 parts by mass of a softener (D); and
0.01 to 10 parts by mass of a crosslinking agent (E),
wherein the soft propylene-based copolymer (B) further satisfies the following requirements (b-1) and (b-2):

(b-1) 90 to 50 mol% of a constituent unit derived from propylene, 0 to 30 mol% of a constituent unit derived from 1-butene, and 5 to 30 mol% of a constituent unit derived from ethylene, are contained;
(b-2) a molecular weight distribution (Mw/Mn) obtained by gel permeation chromatography (GPC) is in a range of 1.0 to 3.5.

«2» The thermoplastic elastomer composition according to <<1>>, wherein the crosslinking agent (E) is an organic peroxide.

<<3>> The thermoplastic elastomer composition according to <<1>> or «2», wherein a melt flow rate (in accordance with the measurement method of JIS K 7210, 230°C and a 10 kg load) is 1 g/10 minutes or more and less than 80 g/10 minutes.

<<4>> The thermoplastic elastomer composition according to any one of <<1>> to <<3>>, wherein the ethylene·$\alpha$-olefin·non-conjugated polyene copolymer (A) is at least partially crosslinked.

<<5>> The thermoplastic elastomer composition according to any one of <<1>> to <<4>>, wherein a Shore A hardness (instantaneous value) (in accordance with the measurement method of JIS K 6253, using 3 sheets each having a thickness of 2 mm stacked on top of each other) is 40 to 100.

<<6>> A molded article comprising the thermoplastic elastomer composition according to any one of <<1>> to <<5>>.

<<7>> The molded article according to <<6>>, having an internal haze of 80% or less.

<<8>> The molded article according to <<6>> or <<7>>, having a total light transmittance of 83% or higher.

<<9>> The molded article according to any one of <<6>> to <<8>>, being an automobile interior skin material.

<<10>> The molded article according to <<9>>, wherein the automobile interior skin material is an instrument panel, a door trim, an armrest or a console.

<<11>> A decorative panel, comprising:

a molded article comprising a thermoplastic elastomer composition, the thermoplastic elastomer composition comprising

100 parts by mass of an ethylene·$\alpha$-olefin·non-conjugated polyene copolymer (A),
10 to 5,000 parts by mass of a soft propylene-based copolymer (B), a melting point ($Tm_B$) of which is not observed or is lower than 115°C,
10 to 500 parts by mass of a crystalline polyolefin (C), a melting point ($Tm_C$) of which is 115°C or higher,
0 to 200 parts by mass of a softener (D), and
0.01 to 10 parts by mass of a crosslinking agent (E); and

a display device or an operation unit that is installed below the molded article.

<<12>> A method for producing a thermoplastic elastomer composition, comprising:

a first step of dynamic crosslinking

100 parts by mass of an ethylene·$\alpha$-olefin·non-conjugated polyene copolymer (A),
0 to 5,000 parts by mass of a soft propylene-based copolymer (B), a melting point ($Tm_B$) of which is not observed or is lower than 115°C,
10 to 500 parts by mass of a crystalline polyolefin (C), a melting point ($Tm_C$) of which is 115°C or higher,
0 to 70 parts by mass of a softener (D), and
0.01 to 10 parts by mass of a crosslinking agent (E) to obtain a composition (i); and

a second step of adding 0 to 5,000 parts by mass of a soft propylene-based copolymer (B) to the composition (i), wherein a total amount of the soft propylene-based copolymer (B) added in the first step and the second step is 20 to 5,000 parts by mass, and
the soft propylene-based copolymer (B) further satisfies the following requirements (b-1) and (b-2):

(b-1) 90 to 50 mol% of a constituent unit derived from propylene, 0 to 30 mol% of a constituent unit derived from 1-butene, and 5 to 30 mol% of a constituent unit derived from ethylene, are contained;
(b-2) a molecular weight distribution (Mw/Mn) obtained by gel permeation chromatography (GPC) is in a range of 1.0 to 3.5.

<<13>> The method for producing a thermoplastic elastomer composition according to <<12>>, wherein the amount of the soft propylene-based copolymer (B) added in the first step is 0 parts by mass.

Advantageous Effects of Invention

According to the present invention, a highly transparent composition and a molded article thereof, capable of being suitably used for applications such as interior skin materials, without impairing appearance (designability such as emboss moldability) and moldability that conventional interior skin materials have, can be provided.

Description of Embodiments

Embodiments of the present invention will be described in detail below, however, the present invention is not limited to the configuration of the following embodiments. A numerical value range represented herein by using " to " refers to a range that includes numerical values described before and after " to " as the lower limit value and the upper limit value.

Moreover, in a case in which numerical value ranges are stepwisely described, the upper limits and lower limits of each numerical value range can be arbitrarily combined.

[Thermoplastic elastomer composition]

The thermoplastic elastomer composition according to the present invention (hereinafter also referred to as the "present composition") is a composition containing 100 parts by mass of an ethylene·$\alpha$-olefin·non-conjugated polyene copolymer (A), 10 to 5,000 parts by mass of a soft propylene-based copolymer (B), a melting point ($Tm_B$) of which is not observed or is lower than 115°C, 10 to 500 parts by mass of a crystalline polyolefin (C), a melting point ($Tm_C$) of which is 115°C or higher, 0 to 200 parts by mass of a softener (D), and 0.01 to 10 parts by mass of a crosslinking agent (E), and preferably containing 100 parts by mass of an ethylene·$\alpha$-olefin-non-conjugated polyene copolymer (A), 20 to 5,000 parts by mass of a soft propylene-based copolymer (B), a melting point ($Tm_B$) of which is not observed or is lower than 115°C, 10 to 500 parts by mass of a crystalline polyolefin (C), a melting point ($Tm_C$) of which is 115°C or higher, 0 to 70 parts by mass of a softener (D), and 0.01 to 10 parts by mass of a crosslinking agent (E). The present composition may be such that it contains each of these components, and such that each component may be simply mixed together, or at least a portion of the components may be crosslinked.

<Ethylene·$\alpha$-olefin·non-conjugated polyene copolymer (A)>

The ethylene·$\alpha$-olefin·non-conjugated polyene copolymer (A) is not particularly limited as long as it contains a constituent unit derived from ethylene, a constituent unit derived from an $\alpha$-olefin, and a constituent unit derived from a non-conjugated polyene, and, for example, the ethylene·$\alpha$-olefin·non-conjugated polyene copolymer (A) can be synthesized by a conventionally known method for copolymerizing ethylene, an $\alpha$-olefin, and a non-conjugated polyene.

The ethylene·$\alpha$-olefin·non-conjugated polyene copolymer (A) contained in the present composition may be one kind or two or more kinds.

When a total of the content of a constituent unit derived from ethylene (hereinafter also referred to as "ethylene content") and the content of a constituent unit derived from an $\alpha$-olefin (hereinafter also referred to as "$\alpha$-olefin content") in the ethylene·$\alpha$-olefin·non-conjugated polyene copolymer (A), is 100 mol%, the ethylene content is preferably 50 mol% or more, more preferably from 50 to 95 mol%, further preferably from 55 to 85 mol%, and particularly preferably from 60 to 83 mol% from the viewpoint such as being able to easily obtain a molded article with a favorable molding appearance.

The $\alpha$-olefin is not particularly limited, and is preferably an $\alpha$-olefin having 3 to 20 carbon atoms. Specific examples of the $\alpha$-olefin having 3 to 20 carbon atoms include propylene, 1-butene, 1-pentene, 1-hexene, 4-methyl-1-pentene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 9-methyl-1-decene, 11-methyl-1-dodecene, and 12-ethyl-1-tetradecene. These $\alpha$-olefins may be used singly or two or more kinds thereof.

The $\alpha$-olefin is preferably propylene, 1-butene, 4-methyl-1-pentene, 1-hexene, or 1-octene, and more preferably propylene.

When a total of the ethylene content and the $\alpha$-olefin content in the ethylene·$\alpha$-olefin·non-conjugated polyene copolymer (A), is 100 mol%, the $\alpha$-olefin content is preferably 50 mol% or less, more preferably from 5 to 50 mol%, further preferably from 15 to 45 mol%, and particularly preferably from 17 to 40 mol%, from the viewpoint such as being able to easily obtain a molded article with a favorable molding appearance.

The ethylene content and $\alpha$-olefin content can be determined by measurement using $^{13}$C-NMR.

Examples of the non-conjugated polyene include a chain non-conjugated diene, a cyclic non-conjugated diene, and a triene. These non-conjugated polyenes may be used singly or in combinations of two or more kinds.

Examples of the chain non-conjugated diene include, for example, 1,4-hexadiene, 1,5-hexadiene, 1,6-hexadiene, 3-methyl-1,4-hexadiene, 4-methyl-1,4-hexadiene, 5- methyl-1,4-hexadiene, 4,5-dimethyl-1,4-hexadiene, 7-methyl-1,6-octadiene, 3,7-dimethyl-1,6-octadiene, 5,7-dimethyl-1,7-octadiene, 8-methyl-4-ethylidene-1,7-nonadiene, and 4-ethylidene-1,7-undecadiene.

Examples of the cyclic non-conjugated diene include tetrahydroindene, methyltetrahydroindene, 5-ethylidene-2-norbornene, 5-methylene-2-norbornene, 5-propenyl-2-norbornene, 5-isopropylidene-2-norbornene, 5-vinylidene-2-norbornene, 6-chloromethyl-5-isopropenyl-2-norbornene, 5-vinyl-2-norbornene, 5-isopropenyl-2-norbornene, 5-isobutenyl-2-norbornene, 5-cyclohexylidene-2-norbornene, cyclopentadiene, dicyclopentadiene, cyclooctadiene, and norbornadiene.

Examples of the triene include 2,3-diisopropylidene-5-norbornene, 2-ethylidene-3-isopropylidene-5-norbornene, 2-propenyl-2,2-norbornadiene, 4-ethylidene-8-methyl-1,7-nonadiene, 6,10-dimethyl-1,5,9-undecatriene, 5,9-dimethyl-1,4,8-decatriene, 6,9-dimethyl-1,5,8-decatriene, 6,8,9-trimethyl-1,5,8-decatriene, 6-ethyl-10-methyl-1,5,9-undecatriene, 4-ethylidene-1,6-octadiene, 7-methyl-4-ethylidene-1,6-octadiene, 7-methyl-4-ethylidene-1,6-nonadiene, 7-ethyl-4-ethylidene-1,6-nonadiene, 6,7-dimethyl-4-ethylidene-1,6-octadiene, 6,7-dimethyl-4-ethylidene-1,6-nonadiene, 4-ethylidene-1,6-decadiene, 7-methyl-4-ethylidene-1,6-decadiene, 7-methyl-6-propyl-4-ethylidene-1,6-octadiene, 4-ethylidene-1,7-nonadiene, and 4-ethylidene-1,7-undecadiene.

Among these, the non-conjugated polyene is preferably 1,4-hexadiene, 5-ethylidene-2-norbornene, 5-vinyl-2-norbornene, cyclopentadiene, dicyclopentadiene, or 4-ethylidene-8-methyl-1,7-nonadiene, and more preferably 5-ethylidene-2-norbornene or 5-vinyl-2-norbornene.

The content of a constituent unit derived from the non-conjugated polyene in the ethylene·$\alpha$-olefin·non-conjugated polyene copolymer (A), is the amount such that an iodine value of the ethylene·$\alpha$-olefin·non-conjugated polyene copolymer (A) is preferably from 1 to 50, more preferably from 5 to 40, and particularly preferably from 10 to 30. With the iodine value of the ethylene·$\alpha$-olefin·non-conjugated polyene copolymer (A) within the aforementioned range, a thermoplastic elastomer composition crosslinked in a well-balanced manner can be easily obtained when the ethylene·$\alpha$-olefin-non-conjugated polyene copolymer (A) is (partially) crosslinked.

The content of a constituent unit derived from the non-conjugated polyene is also usually from 2 to 20% by mass relative to 100% by mass of the total constituent unit constituting the ethylene·$\alpha$-olefin·non-conjugated polyene copolymer (A).

As the ethylene·$\alpha$-olefin·non-conjugated polyene copolymer (A), a component, the Mooney viscosity [$ML_{1+4}$ (125°C)] of which, as measured in accordance with the measurement method of ASTM D 1646-19a, is preferably from 10 to 250 and more preferably from 30 to 150, is desirably used, in terms of being capable of easily obtaining a uniform mixture with the components (B) to (E) contained in the present composition.

In a case in which the Mooney viscosity of the ethylene·$\alpha$-olefin·non-conjugated polyene copolymer (A) itself is not within the aforementioned range, the ethylene·$\alpha$-olefin·non-conjugated polyene copolymer (A) may be oil-extended by conventionally known methods, if necessary, by using, for example, an oil extender such as the softener described later. As the oil extender, a petroleum-based softener such as a paraffinic process oil is preferred. The preferable amount of oil extender used upon the oil extension is an amount such that the Mooney viscosity of the oil extender is within the aforementioned range, for example, from 0 to 150 parts by mass relative to 100 parts by mass of the ethylene·$\alpha$-olefin·non-conjugated polyene copolymer (A).

The intrinsic viscosity [$\eta$] of the ethylene·$\alpha$-olefin·non-conjugated polyene copolymer (A), as measured in a decalin solvent at 135°C, is preferably 1 to 10 dl/g and more preferably 1.5 to 8 dl/g.

The ethylene·$\alpha$-olefin·non-conjugated polyene copolymer (A) may be present in the present composition in any crosslinked condition, such as uncrosslinked, partially crosslinked, or fully crosslinked. In the case of the present composition containing an ethylene·$\alpha$-olefin·non-conjugated polyene copolymer (A) that is at least partially crosslinked, a timing of crosslinking is not particularly limited, and for example, the ethylene·$\alpha$-olefin·non-conjugated polyene copolymer (A) may be at least partially (dynamic) crosslinked prior to having mixed with the soft propylene-based copolymer (B), the crystalline polyolefin (C), the softener (D), and the crosslinking agent (E), which constitute the present composition, and the ethylene·$\alpha$-olefin·non-conjugated polyene copolymer (A) may be at least partially (dynamic) crosslinked after or while mixing with other components constituting the present composition.

In the present composition, the ethylene·$\alpha$-olefin·non-conjugated polyene copolymer (A) is preferably at least partially crosslinked. The ethylene·$\alpha$-olefin·non-conjugated polyene copolymer (A) that is being crosslinked, can obtain a composition having excellent mechanical properties, heat resistance, and a molding appearance and a molded article thereof.

Note, as a degree of crosslinking of the ethylene·$\alpha$-olefin-non-conjugated polyene copolymer (A) increases, a compression set of a molded article produced from the present composition tends to decrease. Therefore, a lower or higher degree of crosslinking of the ethylene·$\alpha$-olefin·non-conjugated polyene copolymer (A) can be conjectured from a compression set, an oil swelling rate, and an effective network chain density of the molded article produced from the present composition.

The content of ethylene·$\alpha$-olefin·non-conjugated polyene copolymer (A) in the present composition is not particularly limited as long as it satisfies the aforementioned amount ratios of each component constituting the composition described above, in terms of, for example, being capable of easily obtaining a molded article having hardness required for practical use; and the upper limit is usually 80% by mass or less, preferably 55% by mass or less, more preferably 45% by mass or less, and further preferably 25% by mass or less. The lower limit is usually 1% by mass or more and preferably 4% by mass or more.

The ethylene·$\alpha$-olefin·non-conjugated polyene copolymer (A) may be synthesized by conventionally known methods or may be a commercially available product for use.

<Soft propylene-based copolymer (B)>

A melting point (Tm$_B$) of the soft propylene-based copolymer (B) according to the present invention is not observed or is lower than 115°C, and it is preferably not observed or is lower than 113°C, it is more preferably not observed or is lower than 110°C, and it is further preferably not observed or is lower than 108°C. Within the range of the melting point (Tm$_B$) of the soft propylene-based copolymer (B), a composition with excellent mechanical properties and heat resistance and a molded article thereof, can be obtained. The soft propylene-based copolymer (B) contained in the present composition may be one kind or two or more kinds.

The melting point of the soft propylene-based copolymer (B) can be specifically measured by the method described in Examples below.

The soft propylene-based copolymer (B) is a propylene polymer selected from a propylene homopolymer, a propylene-ethylene block copolymer, a propylene-butene block copolymer, a propylene·$\alpha$-olefin block copolymer, a propylene·ethylene random copolymer, a propylene·$\alpha$-olefin random copolymer, a propylene·$\alpha$-olefin graft copolymer, and a propylene·$\alpha$-olefin·ethylene random copolymer, for example.

Specific examples of the $\alpha$-olefin include the $\alpha$-olefins described in the above item <Ethylene·$\alpha$-olefin·non-conjugated polyene copolymer (A)>, and ethylene or 1-butene is preferred, and 1-butene is more preferred.

These $\alpha$-olefins may be used singly or two or more kinds thereof may be used.

The soft propylene-based copolymer (B) further satisfies the following requirements (b-1) and (b-2).

(b-1) 90 to 50 mol% of a constituent unit derived from propylene, 0 to 30 mol% of a constituent unit derived from 1-butene, and 5 to 30 mol% of a constituent unit derived from ethylene, are contained.

(b-2) A molecular weight distribution (Mw/Mn) obtained by gel permeation chromatography (GPC) is in a range of 1.0 to 3.5.

The soft propylene-based copolymer (B) according to the present invention also preferably satisfies one or more of the following requirements (b-3) to (b-5) and more preferably satisfies all of the requirements (b-3) to (b-5):

(b-3) The intrinsic viscosity [$\eta$], measured at 135°C in a decalin solvent, is in a range of from 0.01 to 10 dl/g.

(b-4) A triad tacticity (mm fraction) is 85% or more.

(b-5) Heat of fusion ($\Delta$H) is not observed or is less than 50 J/g.

Each of these requirements will be described below.

<<(b-1) Content of constituent unit>>

In terms of the soft propylene-based copolymer (B) capable of easily obtaining a highly transparent molded article with a favorable appearance, for example, the soft propylene-based copolymer (B) includes a constituent unit derived from propylene (hereinafter also referred to as "propylene content") in an amount of preferably from 90 to 50 mol%, more preferably from 85 to 55 mol%, and further preferably from 80 to 65 mol%, a constituent unit derived from 1-butene (hereinafter also referred to as "1-butene content") in an amount of preferably from 0 to 30 mol%, more preferably from 1 to 25 mol%, and further preferably from 1 to 20 mol%, and a constituent unit derived from ethylene (hereinafter also referred to as "ethylene content") in an amount of preferably from 5 to 30 mol%, more preferably from 5 to 25 mol%, and further preferably from 5 to 23 mol%, when a total of constituent units constituting the soft propylene-based copolymer (B) is 100 mol%.

The propylene content, 1-butene content, and ethylene content can be determined by $^{13}$C-NMR measurement.

<<(b-2) Molecular weight distribution (Mw/Mn)>>

The molecular weight distribution (Mw/Mn) of the soft propylene-based copolymer (B) is preferably in a range of from 1.0 to 3.5, more preferably from 1.5 to 3.0, and further preferably from 1.7 to 2.8. With the molecular weight distribution (Mw/Mn) within the aforementioned range, the present composition has favorable moldability.

It is noted that the molecular weight distribution (Mw/Mn) in the present embodiment, is the value calculated from a weight-average molecular weight (Mw) and a number-average molecular weight (Mn) in terms of polystyrene, as measured by gel permeation chromatography (GPC).

<<(b-3) Intrinsic viscosity [η]>>

The intrinsic viscosity [η] of the soft propylene-based copolymer (B), as measured at 135°C in a decalin solvent, is preferably from 0.01 to 10 dl/g, more preferably from 0.05 to 5.0 dl/g, and further preferably from 1.0 to 4.5 dl/g. Within the above range of the intrinsic viscosity [η], a thermoplastic elastomer with excellent properties such as weather resistance, ozone resistance, heat aging resistance, and low temperature characteristics, can be obtained.

<<(b-4) Triad tacticity (mm fraction)>>

Stereo-regularity of the soft propylene-based copolymer (B) can be evaluated by a triad tacticity (mm fraction), which is preferably 85% or more, more preferably from 88 to 98%, and still more preferably from 90 to 95%.

The "mm fraction" is defined as a proportion of methyl groups having the same branching direction when three propylene unit chains bonded head to tail present in a polymer chain, are represented by a surface zigzag structure, and is determined from the $^{13}C$-NMR spectrum. Specifically, the mm fraction of the soft propylene-based copolymer (B) used in the present invention can be determined by the method described on from page 21, line 7 to page 26, line 6 of WO2004/087775.

The soft propylene-based copolymer (B) used in the present invention, is preferably from the viewpoint of transparency thereof, such that it has a degree of crystallinity not exceeding 30%, as measured by DSC (differential scanning calorimetry) or X-rays, for example, more preferably 25% or less, further preferably 20% or less, and even further preferably 10% or less.

<<(B-5) Heat of fusion (ΔH)>>

The heat of fusion (ΔH) of the soft propylene-based copolymer (B) is preferably not observed or is less than 50 J/g. It is more preferably not observed or is 45 J/g or less, and further preferably not observed or is 40 J/g or less. The soft propylene-based copolymer (B) of the present invention tends to have a low degree of crystallinity due to satisfying the above range, whereby a thermoplastic elastomer composition containing the soft propylene-based copolymer (B) has excellent transparency.

A method for producing the soft propylene-based copolymer (B) in the present invention, is not particularly limited, and it can be produced in the presence of a known catalyst capable of carrying out stereoregular polymerization of an olefin to give a polymer with isotactic or syndiotactic structure, for example, a catalyst composed mainly of a solid titanium component and an organometallic compound, or a metallocene catalyst in which a metallocene compound is used as one component of the catalyst. In particular, production by copolymerization of propylene, 1-butene, and ethylene in the presence of a metallocene catalyst is preferred. As the metallocene catalyst, for example, the catalysts described in Examples from e1 to e5 of WO2004/087775 and the catalyst described in JP2007-186664A, for example, are preferably used.

The present composition contains from 10 to 5,000 parts by mass, preferably from 20 to 5,000 parts by mass, more preferably from 20 to 4,000 parts by mass, further preferably from 25 to 3,000 parts by mass, even further preferably from 27 to 2,500 parts by mass, and particularly preferably from 30 to 2,500 parts by mass, of soft propylene-based copolymer (B), relative to 100 parts by mass of the ethylene·α-olefin·non-conjugated polyene copolymer (A).

The present composition has a sea-island structure formed by a phase composed of the ethylene·α-olefin·non-conjugated polyene copolymer (A) and a phase composed of the crystalline polyolefin (C), and the present composition containing the soft propylene-based copolymer (B) within the above range allows the soft propylene-based copolymer (B) to be compatible with the crystalline polyolefin (C) phase, whereby a refractive index of the crystalline polyolefin (C) phase can be reduced. This is considered to improve transparency due to reduction of a refractive index difference between the ethylene·α-olefin·non-conjugated polyene copolymer (A) phase and the crystalline polyolefin (C) phase.

<Crystalline polyolefin (C)>

The crystalline polyolefin (C) according to the present invention has a melting point (Tm$_C$) of 115°C or higher. It is preferably from 115 to 175°C, more preferably from 118 to 172°C, and further preferably from 120 to 170°C. Within the above range of the melting point (Tm$_C$) of crystalline polyolefin (C), a composition with excellent mechanical properties and heat resistance and a molded article, can be obtained.

The melting point of crystalline polyolefin (C) can be specifically measured by the method described in Examples below.

The heat of fusion (ΔH) of crystalline polyolefin (C) according to the present invention is preferably 50 J/g or higher. It is more preferably 60 J/g or more and further preferably 70 J/g or more. The crystalline polyolefin (C) of the present invention tends to have a high degree of crystallinity due to satisfying the above range, and a thermoplastic elastomer composition containing the crystalline polyolefin (C) has excellent physical properties such as mechanical properties and heat resistance, for example.

A method for producing the crystalline polyolefin (C) used in the present invention is not particularly limited as long as a crystalline polymer can be obtained, and for example, the crystalline polyolefin (C) is preferably produced by polymerizing one or more kinds of monoolefins by polymerization methods such as a vapor phase method, a liquid phase method, a slurry method, and a bulk method.

The crystalline polyolefin (C) can be a homopolymer or a copolymer. The homopolymer can be either isotactic or syndiotactic.

The above homopolymer is usually an ethylene homopolymer, a propylene homopolymer, or a 1-butene homopolymer, preferably the ethylene homopolymer or the propylene homopolymer, and further preferably the propylene homopolymer.

The copolymer described above should not be limited as long as it is polymerized from two or more kinds of monoolefins. A structure of the copolymer may be a random structure or a block structure.

Examples of a suitable raw material olefin specifically include α-olefins having 2 to 20 carbon atoms, such as ethylene, propylene, 1-butene, 1-pentene, 1-hexene, 1-octene, 1-decene, 2-methyl-1-propene, 3-methyl-1-pentene, 4-methyl-1-pentene, and 5-methyl-1-hexene. The number of carbon atoms is preferably from 2 to 12 and more preferably from 2 to 6.

These α-olefins may be used singly or in combinations of two or more kinds.

Specific examples of the copolymer include a propylene-ethylene random copolymer, a propylene-ethylene block copolymer, an ethylene·1-butene copolymer, an ethylene·1-hexene copolymer, and an ethylene·4-methyl-1-pentene copolymer.

Representative resins of the crystalline polyolefin (C) can also be obtained commercially. Examples of a commercially available crystalline polyolefin (C) include crystalline polyolefins produced and sold under product names, such as Evolue [registered trademark] (manufactured by Prime Polymer Co., Ltd.), Prime Polypro [registered trademark] (manufactured by Prime Polymer Co., Ltd.), Novatec™ (manufactured by Nippon Polypro Co., Ltd.), and Sun Aromar [registered trademark] (manufactured by SUN AROMA CO., LTD.), for example.

The crystalline polyolefin (C) used in the present invention plays a role in improving flowability and heat resistance of the present composition.

The crystalline polyolefin (C) has a melt flow rate (MFR: ASTM D 1238-65T, 230°C, a 2.16 kg load), which is usually in a range of from 0.01 to 100 g/10 minutes, preferably from 0.05 to 80 g/10 minutes, more preferably from 0.5 to 50 g/10 minutes, and further preferably from 0.5 to 30 g/10 minutes.

The present composition contains 10 to 500 parts by mass, preferably 30 to 450 parts by mass, and more preferably 50 to 400 parts by mass, of the crystalline polyolefin (C), relative to 100 parts by mass of the ethylene·α-olefin·non-conjugated polyene copolymer (A).

<Softener (D)>

The present composition preferably uses a softener for the purpose of adjusting flowability and hardness, for example.

Specific examples of the softener include petroleum-based softeners such as a process oil, a lubricating oil, paraffin, liquid paraffin, polyethylene wax, polypropylene wax, petroleum asphalt, and Vaseline; coal tar-based softeners such as coal tar and coal tar pitch; fatty oilbased softeners such as a castor oil, a linseed oil, a rapeseed oil, a soybean oil, and a coconut oil; a tall oil; sub (factice); waxes such as beeswax, carnauba wax, and lanolin; fatty acids or fatty acid salts, such ricinoleic acid, palmitic acid, stearic acid, barium stearate, calcium stearate, and zinc laurate; naphthenic acid; a pine oil, rosin or derivatives thereof; synthetic polymer-based softeners such as a terpene resin, a petroleum resin, a coumarone indene resin, and an atactic polypropylene; ester-based softeners such as dioctyl phthalate, dioctyl adipate, and dioctyl sebacate; microcrystalline wax, a liquid polybutadiene, a modified liquid polybutadiene, a liquid polyisoprene, a terminal-modified polyisoprene, a hydrogenated terminal-modified polyisoprene, liquid THIOKOL, and a hydrocarbon-based synthetic lubricating oil.

Among them, a petroleum-based softener, in particular a process oil is preferred.

As described above, the softener that has been preliminarily mixed (oil extension), for example, with the ethylene·α-olefin·non-conjugated polyene copolymer (A), may be used, or the softener may be used upon preparation of the present composition, or may be added afterwards upon dynamic heat treatment of each component to be compounded in the present composition.

The present composition contains from 0 to 200 parts by mass, preferably from 1 to 200 parts by mass, more preferably from 20 to 200 parts by mass, further preferably from 40 to 180 parts by mass, and particularly preferably from 50 to 150 parts by mass, of the softener (D), relative to 100 parts by mass of the ethylene·α-olefin·non-conjugated polyene copolymer (A). The present composition containing from 0 to 70 parts by mass or from 0 to 70.0 parts by mass of the softener (D), relative to 100 parts by mass of the ethylene·α-olefin·non-conjugated polyene copolymer (A), is also preferred aspect. Furthermore, the present composition also more preferably contains from 1 to 70 parts by mass or from 1 to 70.0 parts by mass, further preferably from 20 to 70 parts by mass or from 20 to 70.0 parts by mass, and particularly preferably 40 to 70 parts by mass or 40 to 70.0 parts by mass, of the softener (D), relative to 100 parts by mass of the ethylene·α-olefin·non-conjugated polyene copolymer (A).

With the content of softener within the aforementioned range, the present composition with flowability suitable for molding tends to be easily obtained, and furthermore, a molded article with excellent mechanical properties, heat resistance, and heat aging resistance, tends to be easily obtained.

<Crosslinking agent (E)>

In a case in which the ethylene·α-olefin·non-conjugated polyene copolymer (A) in the present composition, is wished to be partially or completely crosslinked, the crosslinking agent (E) is preferably used, particularly upon dynamic crosslinking of an uncrosslinked composition compounded with each component, and the crosslinking agent (E) is used in preparation of the present composition in which at least a portion of components has been crosslinked.

The crosslinking agent (E) is not particularly limited, and any conventionally known crosslinking agent can be used, specific examples of which include an organic peroxide, sulfur, a sulfur compound, and a phenolic crosslinking agent.

Among them, the organic peroxide is preferred from the viewpoints of the resulting composition and a molded article thereof, being excellent in transparency, high designability, heat resistance and mechanical properties.

Examples of the organic peroxide include dicumyl peroxide, di-tert-butyl peroxide, 2,5-dimethyl-2,5-di-(tert-butylperoxy) hexane, 2,5-dimethyl-2,5- di(tert-butylperoxy)hexyne-3, 1,3-bis(tert-butylperoxyisopropyl) benzene, 1,1-bis(tert-butylperoxy)-3,3,5-trimethylcyclohexane, n-butyl-4,4-bis(tert-butylperoxy) valerate, benzoyl peroxide, p-chlorobenzoyl peroxide, 2,4-dichlorobenzoyl peroxide, tert-butyl peroxybenzoate, tert-butyl perbenzoate, tert-butyl peroxyisopropyl carbonate, diacetyl peroxide, lauroyl peroxide, and tert-butyl cumyl peroxide.

Among them, 2,5-dimethyl-2,5-di(tert-butylperoxy)hexane, 2,5-dimethyl-2,5-di(tert-butylperoxy)hexyne-3, 1,3-bis(tert-butylperoxyisopropyl)benzene, 1,1-bis(tert-butylperoxy)-3,3,5-trimethylcyclohexane, and n-butyl-4,4-bis(tert-butylperoxy)valerate are preferred, in terms of odorability and scorch stability, for example.

In the case of the present composition containing the crosslinking agent (E), the content of crosslinking agent (E) in the present composition is preferably from 0.01 to 10 parts by mass, more preferably from 0.1 to 8.0 parts by mass, further preferably from 0.1 to 5.0 parts by mass, and even further preferably from 0.1 to 3.0 parts by mass, relative to 100 parts by mass of the ethylene·α-olefin·non-conjugated polyene copolymer (A), in terms of being capable of easily obtaining a molded article with excellent hardness.

<Other components>

<<Crosslinking aid>>

In the case of using the crosslinking agent (E), a crosslinking aid is preferably used from the viewpoint of improving efficiency of a crosslinking reaction.

The crosslinking aid is not particularly limited, and conventionally known crosslinking aids can be used, which may be appropriately selected according to the kind of crosslinking agent (E).

In the case of using an organic oxide as the crosslinking agent (E), examples of the crosslinking aid include, for example, sulfur, p-quinonedioxime, p,p'-dibenzoylquinonedioxime, N-methyl-N,4-dinitrosoaniline, nitrobenzene, diphenylguanidine, trimethylolpropane-N,N'-m-phenylenedimaleimide, vinyl or methacrylate monomers such as divinylbenzene, triallyl cyanurate, vinyl butyrate, vinyl stearate, ethylene glycol dimethacrylate, diethylene glycol dimethacrylate, a polyethylene glycol dimethacrylate, trimethylolpropane trimethacrylate, and allyl methacrylate.

Among them, divinylbenzene is preferred because it has favorable compatibility with each component constituting the present composition and also acts as a dispersing aid for organic peroxides due to having a solubilizing effect on the organic peroxide, thereby facilitating homogeneous crosslinking to occur upon heat treatment. Therefore, use of divinylbenzene as the crosslinking aid, tends to be able to easily obtain the present composition with flowability and physical properties in a well-balanced manner.

In the case of the present composition containing the crosslinking aid, the content of crosslinking aid in the present composition is preferably from 0.01 to 10.0 parts by mass, more preferably from 0.1 to 8.0 parts by mass, further preferably from 0.1 to 5.0 parts by mass, and particularly preferably from 0.1 to 3.0 parts by mass, relative to 100 parts by mass of the ethylene·$\alpha$-olefin·non-conjugated polyene copolymer (A).

<<Other polymer or additive>>

The present composition may contain other polymer or an additive other than the components (A) to (E), if necessary, in addition thereto, to the extent that the objects of the present invention are not impaired.

Examples of other polymers include, for example, a styrenic thermoplastic elastomer, a propylene·$\alpha$-olefin random copolymer, butyl rubber, polyisobutylene rubber, nitrile rubber (NBR), natural rubber (NR), and silicone rubber, for example.

The amount added in the case of using other polymers is usually from 0.1 to 50 parts by mass and preferably from 5 to 40 parts by mass, relative to 100 parts by mass of the ethylene·$\alpha$-olefin·non-conjugated polyene copolymer (A). Other polymers or additives may be used singly or two or more kinds may be used.

Specific examples of the styrenic thermoplastic elastomer include a styrene·isoprene block copolymer, a hydrogenated product of styrene·isoprene block copolymer (SEP), a hydrogenated product of styrene·isoprene·styrene block copolymer (SEPS; a polystyrene·polyethylene/propylene·polystyrene block copolymer), a styrene-butadiene copolymer (for example, a styrene-butadiene block copolymer), and a hydrogenated product of styrene-butadiene block copolymer (SEBS; a polystyrene·polyethylene/butylene·polystyrene block copolymer), for example.

Examples of other additives include a crosslinking aid, an antistatic agent, an age resistor, a flame retardant, a slipping agent, a nucleating agent, a filler, an antioxidant, a weather stabilizer, and a coloring agent, for example.

In the case of using these other additives, the total amount thereof is usually from 0.01 to 20 parts by mass, preferably from 0.1 to 10 parts by mass, and further preferably from 0.1 to 5 parts by weight, relative to 100 parts by mass of the total amount of components (A) to (C). The amount of filler is usually from 1 to 50 parts by mass, preferably from 1 to 45 parts by mass, and further preferably from 1 to 40 parts by mass, relative to 100 parts by mass of the component (A).

Examples of the nucleating agent include non-melt type and melt type crystallization nucleating agents, which can be used singly or combined for use with two or more kinds thereof.

Examples of the non-melt type crystallization nucleating agent include inorganic substances such as talc, mica, silica, and aluminum, brominated biphenyl ether, aluminum hydroxy dip-tert-butyl benzoate (TBBA), an organic phosphate, and a rosin-based crystallization nucleating agent, substituted triethylene glycol terephthalate, and Terylene & Nylon fibers, and particularly the aluminum hydroxy di-p-tert-butyl benzoate, sodium methylene-bis(2,4-di-tert-butylphenyl)phosphate, sodium 2,2'-methylenebis(4,6-di-tert-butylphenyl)phosphate, and the rosin-based crystallization nucleating agent, are preferable.

Examples of the melt-type crystallization nucleating agent include sorbitol-based compounds such as dibenzylidene sorbitol (DBS), substituted DBS, and a lower alkyl dibenzylidene sorbitol (PDTS).

Examples of the slipping agent include a fatty acid amide, a silicone oil, glycerin, wax, and a paraffinic oil, for example.

Examples of the filler include conventionally known fillers, and specific examples thereof include one or more kinds selected from carbon black, calcium carbonate, calcium silicate, clay, kaolin, talc, silica, diatomaceous earth, mica powder, asbestos, alumina, and barium sulfate, aluminum sulfate, calcium sulfate, basic magnesium carbonate, molybdenum disulfide, graphite, glass fibers, glass bulb, Shirasu balloon, basic magnesium sulfate whisker, calcium titanate whisker, and aluminum borate whisker, for example.

<Production method and physical properties of the present composition>

The present composition can be produced by mixing and kneading the ethylene·$\alpha$-olefin·non-conjugated polyene copolymer (A), the soft propylene-based copolymer (B), the crystalline polyolefin (C), the softener (D), the crosslinking agent (E), and other additive described above, if necessary.

For the production of the present composition, general methods such as the Banbury mixer, a kneader, a single-screw extruder, and a twin-screw extruder, which are used for production of an ordinary resin composition and elastomer composition, can be employed. Among them, the twin-screw extruder is particularly preferred from the viewpoint of efficiently achieving dynamic crosslinking. The twin-screw extruder can not only uniformly and finely disperse the components (A) to component (E), but also accelerate a crosslinking reaction by adding other components. As a result, the present composition can be continuously produced, which is preferred.

The present composition in which the ethylene·$\alpha$-olefin-non-conjugated polyene copolymer (A) is at least partially crosslinked, is preferably produced by dynamic crosslinking (dynamic heat treatment) an uncrosslinked present composition compounded with the ethylene·$\alpha$-olefin·non-conjugated polyene copolymer (A), the soft propylene-based copolymer (B), the crystalline polyolefin (C), the softener (D), the crosslinking agent (E), and other additive described above if necessary. Examples of the dynamic crosslinking described above include for example, mixing and kneading from the component (A) to the component (E) and the aforementioned other polymer or additive, if necessary, while heating them, by using a mixing·kneading apparatus, and crosslinking while applying shear force is preferred. Upon dynamic crosslinking, at least a crosslinking aid as the aforementioned other additive is preferably used.

The soft propylene-based copolymer (B) in the present composition may be added either before the dynamic crosslinking or after the dynamic crosslinking, or may be added separately before the dynamic crosslinking and after the dynamic crosslinking.

The dynamic crosslinking can provide a composition containing components in a state of the ethylene·$\alpha$-olefin-non-conjugated polyene copolymer (A) being at least partially crosslinked. Here, "at least partially crosslinked" refers to a case where the gel content is in a range of from 5 to 98% by mass and preferably from 10 to 95% by mass.

The dynamic crosslinking is preferably carried out in a non-open apparatus and under an inert gas atmosphere such as a nitrogen or carbon dioxide gas.

A heating temperature in the dynamic crosslinking is usually from 125 to 280°C and preferably from 145 to 240°C, and a mixing and kneading time is usually from 1 to 30 minutes and preferably from 3 to 20 minutes.

Examples of shear force applied upon the mixing and kneading include shear force such that the maximum shear rate is, for example, from 10 to 100,000 $sec^{-1}$, preferably from 100 to 50,000 $sec^{-1}$, more preferably from 1,000 to 10,000 $sec^{-1}$, and further preferably from 2,000 to 7,000 $sec^{-1}$.

Examples of a preferred method for producing the present composition include, for example, the following:
A method for producing a thermoplastic elastomer composition, including:

a first step of dynamic crosslinking

100 parts by mass of an ethylene·$\alpha$-olefin·non-conjugated polyene copolymer (A),
0 to 5,000 parts by mass, preferably 10 parts by mass or more, 20 parts by mass or more, 25 parts by mass or more, 27 parts by mass or more, 30 parts by mass or more, 4,000 parts by mass or less, 3,000 parts by mass or less, or 2,500 parts by mass or less, of a soft propylene-based copolymer (B), a melting point ($Tm_B$) of which is not observed or is lower than 115°C,
10 to 500 parts by mass of a crystalline polyolefin (C), a melting point ($Tm_C$) of which is 115°C or higher,
0 to 70 parts by mass of a softener (D), and
0.01 to 10 parts by mass of a crosslinking agent (E) to obtain a composition (i); and

a second step of adding from 0 to 5,000 parts by mass, preferably 10 parts by mass or more, 20 parts by mass or more, 25 parts by mass or more, 27 parts by mass or more, 30 parts by mass or more, 4,000 parts by mass or less, 3,000 parts by mass or less, or 2,500 parts by mass or less, of a soft propylene-based copolymer (B) to the composition (i),
wherein a total amount of the soft propylene-based copolymer (B) added in the first step and the second step is 20 to 5,000 parts by mass, and
the soft propylene-based copolymer (B) further satisfies the following requirements (b-1) and (b-2):

(b-1) 90 to 50 mol% of a constituent unit derived from propylene, 0 to 30 mol% of a constituent unit derived from 1-butene, and 5 to 30 mol% of a constituent unit derived from ethylene, are contained;
(b-2) a molecular weight distribution (Mw/Mn) obtained by gel permeation chromatography (GPC) is in a range of 1.0 to 3.5.

The first step is a step of sequentially or simultaneously introducing the components (A) to (E) into equipment capable of melting and kneading a resin component, preferably a twin-screw extruder, and carrying out dynamic crosslinking under the conditions described above to obtain the composition (i).

The second step is a step of adding the soft propylene-based copolymer (B) to the composition (i) obtained in the first step.

In the production method of the present composition, the second step may be carried out following the first step, or after the first step, the composition (i) obtained may be pelletized to then carry out the second step.

In the production method of the present invention, the soft propylene-based copolymer (B) may be added only in the first step or only in the second step, or a portion of the soft propylene-based copolymer (B) may be added in the first step and the rest thereof may be added in the second step. In the production method of the present composition having the first step and the second step, an aspect of adding the soft propylene-based copolymer (B) only in the second step, i.e., the amount of soft propylene-based copolymer (B) added in the first step is preferably 0 parts by mass. In the production method of the present invention, a portion or all of the softener constituting the present composition may be added in the second step. In the case of producing the present composition in an aspect of adding the soft propylene-based copolymer (B) only in the first step, production of the present composition only in the first step, i.e., production in an aspect of not having the second step, is also preferred.

In the case of the present composition containing other component other than the components (A) to (E), the other component may be added in the first step or in the second step, however, in the case of using the crosslinking aid, the crosslinking aid is desirably added in the first step.

A melt flow rate of the present composition (in accordance with the measurement method of JIS K 7210, 230°C, a 10 kg load) is preferably 1 g/10 minutes or more and less than 100 g/10 minutes and more preferably 1 g/10 minutes or more and less than 80 g/10 minutes in view of obtaining, for example, a composition excellent in moldability.

The shore A hardness (instantaneous value) (in accordance with the measurement method of JIS K 6253) of the present composition is preferably from 40 to 100, more preferably from 50 to 95, and further preferably from 55 to 90.

Within the above range of the Shore A hardness (instantaneous value), a composition and a molded article, excellent in designability such as a tactile impression and a high-grade appearance and scratch resistance required for practical use, can be obtained, enabling suitable use in parts such as interior skin materials of automobiles.

The Shore A hardness (instantaneous value) can be specifically measured by the method described in Examples below.

The present composition is excellent in moldability and can be suitably used for applications requiring designability such as emboss molding, and is also excellent in transparency.

[Molded article]

The molded article according to the present invention is not particularly limited as long as it contains the present composition, and is a molded article molded by using arbitrary known molding method, depending on its application. Examples of the molding method include press molding, injection molding, extrusion, calendering, hollow molding, vacuum forming, and compression molding. The molded article according to the present invention may be a molded article molded solely from the present composition, or it may be a molded article molded in combination with other materials. The molded article according to the present invention may be used singly or combined for use with a molded article composed of other materials.

An internal haze of the molded article of the present invention is preferably 80% or less, more preferably 70% or less, and further preferably 50% or less. When the internal haze is 80% or less, transparency of the molded article is favorable. Here, the internal haze of the molded article refers to a haze that excludes a haze due to a shape of an outer surface of the molded article.

A total light transmittance of the molded article according to the present invention is preferably 83% or more and more preferably 85% or more. The total light transmittance of 85% or higher provides a molded article having favorable transparency.

The internal haze and the total light transmittance can be specifically measured by the method described in Examples below.

The molded article of the present invention is suitably used as an automobile interior skin material.

Examples of the automobile interior skin material suitably include instrument panels, door trims, armrests, or consoles.

Furthermore, the molded article according to the present invention can be used as part of an interior of a room in buildings (an office building, a hotel, a store, and a general household, for example). The molded article according to the present invention can also be applied to all applications such as various display devices, decorative panels, liquid crystal display TVs, light switches, bathroom monitors, furniture, audio equipment, speakers, home appliances (a rice cooker, a microwave oven, a washing machine, an air conditioner panel, a telephone, and a remote control, for example), for example.

<Decorative panel>

The present composition is excellent in its moldability as well as its transparency, whereby a molded article composed of the thermoplastic elastomer composition of the present invention can be suitably used as a surface layer of a decorative panel including a display device or an operating unit. Examples of the decorative panel according to the present invention include a decorative panel including a display device or an operation unit.

The decorative panel of the present invention includes:

a molded article including a thermoplastic elastomer composition, the thermoplastic elastomer composition containing

100 parts by mass of the ethylene·α-olefin·non-conjugated polyene copolymer (A),

10 to 5,000 parts by mass of the soft propylene-based copolymer (B), a melting point (Tm$_B$) of which is not observed or is lower than 115°C,

10 to 500 parts by mass of the crystalline polyolefin (C), a melting point (Tm$_C$) of which is 115°C or higher,

0 to 200 parts by mass of the softener (D), and

0.01 to 10 parts by mass of the crosslinking agent (E); and

a display device or an operation unit that is installed below the molded article.

A thermoplastic elastomer composition included in a molded article constituting the decorative panel of the present invention is preferably the present composition described above. Specifically, a preferred thermoplastic elastomer composition included in a molded article and constituting the decorative panel of the present invention, contains

100 parts by mass of the ethylene·α-olefin·non-conjugated polyene copolymer (A),

20 to 5,000 parts by mass of the soft propylene-based copolymer (B), a melting point (Tm$_B$) of which is not observed or is lower than 115°C,

10 to 500 parts by mass of the crystalline polyolefin (C), a melting point (Tm$_C$) of which is 115°C or higher,

0 to 70 parts by mass of the softener (D), and

0.01 to 10 parts by mass of the crosslinking agent (E),

wherein the soft propylene-based copolymer (B) further satisfies the following requirement (b-1):

(b-1) 90 to 50 mol% of a constituent unit derived from propylene, 0 to 30 mol% of a constituent unit derived from 1-butene, and 5 to 30 mol% of a constituent unit derived from ethylene, are contained. Preferably, the soft propylene-based copolymer (B) also further satisfies the following requirement (b-2):

(b-2) A molecular weight distribution (Mw/Mn) obtained by gel permeation chromatography (GPC) is in a range of 1.0 to 3.5.

The decorative panel of the present invention usually has a configuration in which a display device or an operating unit is installed below a molded article containing the thermoplastic elastomer composition, i.e., a configuration in which a molded article containing the thermoplastic elastomer composition is installed above the display device or the operating unit, and display shown by the display device or the operating unit can be seen through the molded article including the thermoplastic elastomer composition.

In one aspect of the decorative panel of the present invention, the decorative panel can be made such that when a light source of a display device or an operation unit emits light, display shown by the display device with the operating unit can be seen through the molded article including the thermoplastic elastomer composition, whereas when the light source is not emitting light (non-emitting light), only a surface of the molded article can be seen.

Such a decorative panel of the present invention can be suitably used for instrument panels of automobiles and various pieces of apparatus including a display device or an operation unit, for example, and can be suitable for use in particular for applications required for designability, such as inside automobiles or indoors.

Examples

The present invention will be specifically described below based on Examples, but the present invention is not limited to these Examples. In the following Examples, "part" indicates "part by mass" unless otherwise stated.

The physical properties of the raw materials used in Examples and Comparative Examples were measured as follows.

[Mass fraction of constituent unit]

The mass fraction (% by mass) of each constituent unit contained in an ethylene·α-olefin·non-conjugated polyene copolymer (A-1) was determined from $^{13}$C-NMR measurements. Specifically, the mass fraction was calculated from a $^{13}$C-NMR spectrum of the copolymer (A-1) by using an ECX400P nuclear magnetic resonance spectrometer (manufactured by JEOL Ltd.) under the conditions of a measurement temperature of 120°C, a measurement solvent of ortho-dichlorobenzene/deuterated benzene = 4/1 (volume ratio), and the number of accumulations of 8000 times.

[Weight-average molecular weight (Mw), number-average molecular weight (Mn), and molecular weight distribution (Mw/Mn)]

The weight-average molecular weight (Mw), the number-average molecular weight (Mn), and the molecular weight distribution (Mw/Mn), of each of the soft propylene-based copolymers (B-1), (B-2), and (B-3) were determined by gel permeation chromatography (GPC) at a column temperature of 140°C. Both of the weight-average molecular weight (Mw) and the number-average molecular weight (Mn) were measured in terms of standard polystyrene. The Mw/Mn was calculated based on the weight-average molecular weight (Mw) and the number-average molecular weight (Mn).

[Melting point (Tm) and heat of fusion (ΔH)]

The melting points of the soft propylene-based copolymers (B-1), (B-2), and (B-3), and crystalline polyolefins (C-1) and (C-2) were determined by differential scanning calorimetry (DSC) by the following method.

A 10 mg sample was filled in a designated aluminum pan, and raised from room temperature to a temperature of 200°C at 10°C/min under a nitrogen atmosphere by using an X-DSC7000 (manufactured by Seiko Instruments Inc.). The sample was held at 200°C for 5 minutes and then lowered to -100°C at 10°C/min. The sample was held at -100°C for 5 minutes and then raised to 200°C at 10°C/min for second temperature rise. The melting point (Tm) and heat of fusion (ΔH) of the polymer were determined from a peak of the endothermic curve upon the second temperature rise.

The heat of fusion (ΔH) is calculated by determining an area surrounded by a line including the peak of the endothermic curve obtained by the above measurement and a baseline, which is deemed to be a line connecting a point with no change in heat of fusion on the lower temperature side and a point with no change in heat of fusion on the higher temperature side.

Here, in a case in which a plurality of peaks is detected in the endothermic curve, a temperature and a peak area of the peak detected at the highest temperature side were defined as the melting point (Tm) and the heat of fusion (ΔH), respectively. In a case in which a peak with heat of fusion (ΔH) of 1 J/g or higher is not observed in the measurement temperature range described above (from -100°C to 200°C), it was deemed that the melting point (Tm) and heat of fusion (ΔH) were not observed.

[Intrinsic viscosity]

The intrinsic viscosities [η] of the soft polypropylenes (B-1) and (B-2) are those measured at 135°C by using a decalin solvent.

Specifically, approximately 20 mg of an ethylene·α-olefin·non-conjugated polyene copolymer was dissolved in 15 ml of decalin, and a specific viscosity $\eta_{sp}$ was measured in an oil bath at 135°C. To the decalin solution, 5 ml of the decalin solvent was added to dilute the solution, and then the specific viscosity $\eta_{sp}$ was measured in the same manner. This dilution operation was further repeated twice, and a value of $\eta_{sp}/C$ when a concentration (C) was extrapolated to 0, was obtained as the intrinsic viscosity (see the formula below).

$$[\eta] = \lim(\eta sp/C) \quad (C \to 0)$$

[Raw materials]

The raw materials used in Examples and Comparative Examples are as follows.

(1) Ethylene·α-olefin·non-conjugated polyene copolymer (A-1)

- Oil-extended ethylene·propylene·non-conjugated diene copolymer rubber (EPDM, product name: 3072EPM; manufactured by Mitsui Chemicals, Inc.)
- Ethylene content = 64% by mass, propylene content = 30.6% by mass, non-conjugated diene species: 5-ethylidene-2-norbornene, and non-conjugated diene content = 5.4% by mass
- The Mooney viscosity [$ML_{(1+4)}$125°C] = 51

  The oil content (parts by mass) relative to 100 parts by mass of an ethylene·α-olefin·non-conjugated polyene copolymer = 40 (PHR)

Note, however, the value for copolymer (A-1) in Table 1 denotes the amount of rubber component compounded singly, excluding an oil content. For oil extension of the copolymer (A-1), a paraffinic process oil ("PW-100" manufactured by Idemitsu Kosan Co., Ltd., the following softener) was used.

(2) Soft propylene-based copolymer (B)

[Synthesis Example 1] Preparation of soft propylene-based copolymer (B-1)

By using as a catalyst/co-catalyst, diphenylmethylene(3-t-butyl-5-ethylcyclopentadienyl)(2,7-t-fluorenyl)zirconium dichloride prepared by the method described in JP2007-186664A /methylaluminoxane (manufactured by Tosoh Finechem Corporation, 0.3 mmol in terms of aluminum), ethylene, propylene and 1-butene, which were raw materials, were polymerized in a hexane solution by using continuous polymerization equipment, to obtain a propylene·1-butene·ethylene random copolymer (PBER-1) (76 mol% of propylene, 6 mol% of 1-butene, 18 mol% of ethylene, melting point = not observed ($\Delta H$ = less than 0.5 J/g), Mw/Mn = 2.1, and intrinsic viscosity [$\eta$] = 1.4 dl/g).

[Synthesis Example 2] Preparation of soft propylene-based copolymer (B-2)

By using as a catalyst/co-catalyst, diphenylmethylene(3-t-butyl-5-ethylcyclopentadienyl)(2,7-t-fluorenyl)zirconium dichloride prepared by the method described in JP2007-186664A /methylaluminoxane (manufactured by Tosoh Finechem Corporation, 0.3 mmol in terms of aluminum), ethylene, propylene and 1-butene, which were raw materials, were polymerized in a hexane solution by using continuous polymerization equipment, to obtain a propylene·1-butene·ethylene random copolymer (PBER-1) (67 mol% of propylene, 19 mol% of 1-butene, 14 mol% of ethylene, melting point = not observed ($\Delta H$ = less than 0.5 J/g)), Mw/Mn = 2.1, and intrinsic viscosity [$\eta$] = 1.8 dl/g).

Soft propylene-based copolymer (B-3)

- Propylene·$\alpha$-olefin random copolymer (product name: Vistamaxx 6102 manufactured by Exxon Mobil Corporation; ethylene content = 21.4 mol%; melting point = 105°C; $\Delta H$ = 10 J/g, Mw/Mn = 2.1; MFR (230°C, a 2.16 kg load) = 3.0 g/10 minutes)

(3) Crystalline polyolefin (C)

Crystalline polyolefin (C-1)

- Propylene-ethylene block copolymer (product name: EL-Pro P740J manufactured by SCG Chemicals Co., Ltd.; MFR (in accordance with the measurement method of ASTM D 1238-65T; 230°C, a 2.16 kg load) = 27 g/10 minutes, melting point = 163°C, and $\Delta H$ = 93 J/g)

Crystalline polyolefin (C-2)

- Propylene homopolymer (product name: Prime Polypro J105 manufactured by Prime Polymer Co., Ltd.; MFR (in accordance with the measurement method of ASTM D 1238-65T; 230°C, a 2.16 kg load) = 5 g/10 minutes); melting point = 167°C, and $\Delta H$ = 105 J/g)

(4) Softener (D-1)

- Paraffinic process oil (product name: Diana Process Oil PW-100 manufactured by Idemitsu Kosan Co., Ltd.)

It is noted that the numerical values for the softener (D-1) in Table 1 include the amount compounded derived from oil expansion of the copolymer.

(5) Crosslinking agent (E-1)

- Organic peroxide (2,5-dimethyl-2,5-di-(tert-butylperoxy)hexane), product name: Perhexa 25B manufactured by NOF Corporation)

(6) Other component

(6-1) Crosslinking aid

- Divinylbenzene (product name: DVB-810 manufactured by NIPPON STEEL Chemical & Material Co., Ltd.)

[Example 1]

To 100 parts by mass of copolymer (A) (140 parts by mass of oil-extended ethylene·propylene·non-conjugated diene copolymer rubber (EPDM, product name: 3072EPM manufactured by Mitsui Chemicals Inc.)), 2000 parts by mass of copolymer (B-1) synthesized in Synthesis Example 1, 350 parts by mass of crystalline polyolefin (C-1), 1.0 parts by mass of crosslinking agent (E-1), and 1.0 parts by mass of divinylbenzene as a crosslinking aid, were thoroughly mixed using a Henschel mixer. A pellet of a thermoplastic elastomer composition was obtained by carrying out granulation while injecting the softener (D-1) into a cylinder so that the amount of copolymer (A) including the oil content was 50 parts by mass, in an extruder (model: HYPERKTX-46 manufactured by Kobe Steel, Ltd.; cylinder temperature: C1 = 110°C, C2 = 120°C, C3 = 140°C, C4 = 140°C, C5 = 150°C, C6 = 160°C, C7 and C8 = 180°C, C9 to C14 = 230°C, die temperature: 200°C).

[Examples 2 to 7]

A pellet of a thermoplastic elastomer composition was obtained in the same manner as in Example 1, except that the amounts compounded of raw materials used were changed as described in Table 1.

[Example 8]

A pellet of a thermoplastic elastomer composition was obtained in the same manner as in Example 1, except that the copolymer (B-1) used was changed to the copolymer (B-2) synthesized in Synthesis Example 2 and the amounts compounded of raw materials used were changed as described in Table 1.

[Example 9]

A pellet of a thermoplastic elastomer composition was obtained in the same manner as in Example 1, except that the copolymer (B-1) used was changed to the copolymer (B-3) and the amounts compounded of raw materials used were changed as described in Table 1.

[Examples 10 and 11]

Each of pellets of thermoplastic elastomer compositions was obtained in the same manner as in Example 1, except that the amounts compounded of raw materials used were changed as described in Table 1 and the crystalline polyolefin (C-2) was used.

[Example 12]

To 100 parts by mass of copolymer (A) (140 parts by mass of oil-extended ethylene·propylene·non-conjugated diene copolymer rubber (EPDM, product name: 3072EPM manufactured by Mitsui Chemicals Inc.)), 350 parts by mass of crystalline polyolefin (C-1), 1.0 parts by mass of crosslinking agent (E-1), and 1.0 parts by mass of divinylbenzene as a crosslinking aid, were thoroughly mixed using a Henschel mixer. A pellet of a thermoplastic elastomer composition was produced by carrying out granulation while injecting the softener (D-1) into a cylinder so that the amount of copolymer (A) including the oil content was 50 parts by mass, in an extruder (model: HYPERKTX-46 manufactured by Kobe Steel, Ltd.; cylinder temperature: C1 = 110°C, C2 = 120°C, C3 = 140°C, C4 = 140°C, C5 = 150°C, C6 = 160°C, C7 and C8 = 180°C, C9 to C14 = 230°C, die temperature: 200°C). The resulting thermoplastic elastomer composition and 2,000 parts by mass of the copolymer (B-1) synthesized in Synthesis Example 1 underwent granulation again according to the extrusion above to obtain a pellet of a thermoplastic elastomer composition.

[Example 13]

A pellet of a thermoplastic elastomer composition was obtained in the same manner as in Example 12, except that the amounts compounded of the raw materials used were changed as described in Table 1.

[Comparative Examples 1 and 2]

Each of pellets of thermoplastic elastomer compositions was obtained in the same manner as in Example 1, except that the copolymer (B-1) was not used and the amounts compounded of the raw materials used were changed as described in Table 1.

[Evaluation method of thermoplastic elastomer composition]

<Fabrication of pressed sheet>

Each of pellets of the thermoplastic elastomer compositions obtained in Examples and Comparative Examples underwent press processing in a heat press molding machine (press temperature: 190°C, cooling temperature: 20°C, preheating time: 6 minutes, and pressurized melting time: 4 minutes). As a result of the press processing, two kinds of flat pressed sheets with different thicknesses were produced for each composition. The resulting pressed sheets had a length of 12 cm × a width of 14.7 cm × a thickness of 2 mm, and a length of 12 cm × a width of 14.7 cm × a thickness of 0.5 mm, respectively.

<Shore A hardness (instantaneous value)>

Three pressed sheets with a thickness of 2 mm were stacked and used as a test sample, and a Shore A hardness (instantaneous value) was determined by using a durometer in accordance with the method described in JIS K 6253. The results are shown in Table 1.

<Melt flow rate (MFR)>

The melt flow rate was measured by using each of pellets of the thermoplastic elastomer compositions obtained in Examples and Comparative Examples at 230°C under a load of 10 kg in accordance with JIS K 7210. The results are shown in Table 1.

<Modulus, tensile stress at break, tensile elongation at break>

A dumbbell-shaped No. 3 specimen was fabricated by punching out the pressed sheet with a thickness of 2 mm. By using the test specimen fabricated, a tensile test (tensile speed: 500 mm/min, measurement temperature: 23°C) was performed in accordance with JIS K 6251, and a modulus at 100% elongation (M100), a stress at break (TB) and an elongation at break (EB) were measured. The results are shown in Table 1.

<Internal haze, total light transmittance>

A haze value and a total light transmittance were measured in accordance with JIS K 7105 by using the pressed sheet with a thickness of 0.5 mm. The results are shown in Table 1.

[Fabrication of sample for evaluation of vacuum formability (emboss transferability and corner transferability)]

By using the thermoplastic elastomer composition pellet described above, a sheet with a thickness of 1.0 mm was prepared in a T-die molding machine (manufactured by Toshiba Machine Co., Ltd.; cylinder temperature: C1 = 160, C2 = 170, C3 = 180, C4 = 190, C5 and C6 = 200°C, D1 to D5 = 200°C, roll temperature: 60 to 80°C, haul-off speed: 1.1 m/min, and rotation speed: 55 rpm).

The sheet was formed in a mold with embossed pattern and at the same time the embossed pattern was transferred to the sheet by vacuum forming (molding temperature: 160°C, a vacuum forming machine BVF-1010-PWB manufactured by Fu-se Vacuum Forming Ltd.), to fabricate a molded sample in the form of an instrument panel and a door trim with embossed patterns. By using the molded sample after the forming, emboss transferability and corner transferability were evaluated according to the following criteria.

<Emboss transferability>

The emboss transferability was visually evaluated. The score was given out of 5 points, and evaluation contents were as follows. The number of evaluators was three, and an average score of the three was used to give a score.

(Evaluation criteria)

5 points: The embossed pattern of the molded article is transferred very clearly; extremely excellent emboss transferability.
4 points: The embossed pattern of the molded article is clearly transferred; excellent emboss transferability.
3 points: The embossed pattern of the molded article is transferred to a recognizable degree; favorable emboss transferability.
2 points: The embossed pattern of the molded article is not partially transferred; poor emboss transferability.
1 point: The embossed pattern of the molded article is not entirely transferred; bad emboss transferability.

<Corner Transferability>

Transferability of a corner shape at a corner of the sheet of the molded sample was visually evaluated. The score was given out of 5 points, and evaluation contents were as follows. The number of evaluators was three, and scores of the three were averaged to give a score.

(Evaluation criteria)

5 points: The corner of the molded article is transferred very clearly; extremely excellent corner transferability.
4 points: The corner of the molded article is clearly transferred; excellent corner transferability.
3 points: The corner of the molded article is transferred to a recognizable degree; favorable corner transferability.
2 points: The corner of the molded article is not transferred and roundish; poor corner transferability.
1 point: The corner of the molded article is not transferred, and rounded; bad emboss transferability.

[Table 1]

Table 1

| | | | Unit | Example 1 | Example 2 | Example 3 | Example 4 | Example 5 |
|---|---|---|---|---|---|---|---|---|
| Component | First step | Ethylene·α-olefin·non-conjugated polyene copolymer (A-1) | parts by mass | 100 | 100 | 100 | 100 | 100 |
| | | Soft propylene-based copolymer (B-1) | | 2000 | 520 | 230 | 55 | 25 |
| | | Soft propylene-based copolymer (B-2) | | | | | | |
| | | Soft propylene-based copolymer (B-3) | | | | | | |
| | | Crystalline polyolefin (C-1) | | 350 | 170 | 140 | 120 | 120 |
| | | Crystalline polyolefin (C-2) | | | | | | |
| | | Softener (D-1) | | 50 | 50 | 50 | 50 | 50 |
| | | Crosslinking agent (E-1) | | 1.0 | 1.0 | 1.0 | 1.0 | 1.0 |
| | | Crosslinking aid | | 1.0 | 1.0 | 1.0 | 1.0 | 1.0 |
| | Second step | Soft propylene-based copolymer (B-1) | parts by mass | | | | | |
| Evaluation results | Physical properties | Shore A hardness (instantaneous value) | | 84 | 85 | 87 | 88 | 88 |
| | | MFR (230°C, 10 kgf) | g/10 min | 62 | 50 | 39 | 45 | 27 |
| | | Modulus at 100% elongation (M100) | MPa | 3.5 | 3.7 | 3.9 | 4.2 | 4.3 |
| | | Stress at break (TB) | MPa | 21.0 | 19.9 | 17.7 | 14.5 | 12.1 |
| | | Elongation at break (EB) | % | 980 | 960 | 930 | 890 | 880 |
| | Transparency | Internal haze | % | 10 | 23 | 17 | 33 | 66 |
| | | Total light transmittance | % | 97 | 95 | 95 | 92 | 87 |
| | Transferability | Emboss transferability | - | 5 | 5 | 5 | 4 | 4 |
| | | Corner transferability | - | 5 | 5 | 5 | 4 | 4 |

Table 1 (continued)

| | | | Unit | Example 6 | Example 7 | Example 8 | Example 9 | Example 10 |
|---|---|---|---|---|---|---|---|---|
| Component | First step | Ethylene·α-olefin·non-conjugated polyene copolymer (A-1) | parts by mass | 100 | 100 | 100 | 100 | 100 |
| | | Soft propylene-based copolymer (B-1) | | 210 | 490 | | | 55 |
| | | Soft propylene-based copolymer (B-2) | | | | 55 | | |
| | | Soft propylene-based copolymer (B-3) | | | | | 55 | |
| | | Crystalline polyolefin (C-1) | | 140 | 140 | 120 | 120 | 110 |
| | | Crystalline polyolefin (C-2) | | | | | | 10 |
| | | Softener (D-1) | | 70 | 70 | 50 | 50 | 50 |
| | | Crosslinking agent (E-1) | | 2.0 | 2.0 | 1.0 | 1.0 | 1.0 |
| | | Crosslinking aid | | 2.0 | 2.0 | 1.0 | 1.0 | 1.0 |
| | Second step | Soft propylene-based copolymer (B-1) | parts by mass | | | | | |
| Evaluation results | Physical properties | Shore A hardness (instantaneous value) | | 72 | 79 | 86 | 84 | 88 |
| | | MFR (230°C, 10 kgf) | g/10 min | 21 | 27 | 66 | 49 | 41 |
| | | Modulus at 100% elongation (M100) | MPa | 23 | 2.8 | 4.0 | 3.7 | 4.2 |
| | | Stress at break (TB) | MPa | 12.6 | 19.2 | 14.1 | 9.9 | 15.5 |
| | | Elongation at break (EB) | % | 960 | 980 | 780 | 600 | 890 |
| | Transparency | Internal haze | % | 29 | 15 | 34 | 61 | 31 |
| | | Total light transmittance | % | 89 | 94 | 92 | 88 | 92 |
| | Transferability | Emboss transferability | - | 5 | 5 | 4 | 4 | 4 |
| | | Corner transferability | - | 5 | 5 | 4 | 4 | 4 |

EP 4 361 215 A1

Table 1 (continued)

| Component / Evaluation results | | Item | Unit | Example 11 | Example 12 | Example 13 | Comparative Example 1 | Comparative Example 2 |
|---|---|---|---|---|---|---|---|---|
| Component | First step | Ethylene-α-olefin-non-conjugated polyene copolymer (A-1) | | 100 | 100 | 100 | 100 | 100 |
| | | Soft propylene-based copolymer (B-1) | | 55 | | | 0 | 0 |
| | | Soft propylene-based copolymer (B-2) | parts by mass | | | | | |
| | | Soft propylene-based copolymer (B-3) | | | | | | |
| | | Crystalline polyolefin (C-1) | | 60 | 350 | 120 | 70 | 120 |
| | | Crystalline polyolefin (C-2) | | 60 | | | | |
| | | Softener (D-1) | | 50 | 50 | 50 | 70 | 50 |
| | | Crosslinking agent (E-1) | | 1.0 | 1.0 | 1.0 | 2.0 | 1.0 |
| | | Crosslinking aid | | 1.0 | 1.0 | 1.0 | 2.0 | 1.0 |
| | Second step | Soft propylene-based copolymer (B-1) | parts by mass | | 2000 | 55 | | |
| Evaluation results | Physical properties | Shore A hardness (instantaneous value) | | 91 | 84 | 88 | 53 | 88 |
| | | MFR (230°C, 10 kgf) | g/10 min | 67 | 48 | 32 | 5 | 10 |
| | | Modulus at 100% elongation (M100) | MPa | 4.5 | 3.5 | 4.2 | 1.2 | 4.5 |
| | | Stress at break (TB) | MPa | 16.8 | 13.6 | 6.6 | 4.0 | 9.0 |
| | | Elongation at break (EB) | % | 890 | 720 | 460 | 500 | 630 |
| | Transparency | Internal haze | % | 29 | 11 | 27 | 92 | 85 |
| | | Total light transmittance | % | 93 | 97 | 92 | 72 | 82 |
| | Transferability | Emboss transferability | - | 4 | 5 | 4 | 2 | 2 |
| | | Corner transferability | - | 4 | 5 | 4 | 2 | 2 |

**Claims**

1. A thermoplastic elastomer composition, comprising:

100 parts by mass of an ethylene·α-olefin·non-conjugated polyene copolymer (A);
20 to 5,000 parts by mass of a soft propylene-based copolymer (B), a melting point ($Tm_B$) of which is not observed or is lower than 115°C;
10 to 500 parts by mass of a crystalline polyolefin (C), a melting point (Tmc) of which is 115°C or higher;
0 to 70 parts by mass of a softener (D); and
0.01 to 10 parts by mass of a crosslinking agent (E),
wherein the soft propylene-based copolymer (B) further satisfies the following requirements (b-1) and (b-2):

(b-1) 90 to 50 mol% of a constituent unit derived from propylene, 0 to 30 mol% of a constituent unit derived from 1-butene, and 5 to 30 mol% of a constituent unit derived from ethylene, are contained;
(b-2) a molecular weight distribution (Mw/Mn) obtained by gel permeation chromatography (GPC) is in a range of 1.0 to 3.5.

2. The thermoplastic elastomer composition according to claim 1, wherein the crosslinking agent (E) is an organic peroxide.

3. The thermoplastic elastomer composition according to claim 1 or 2, wherein a melt flow rate (in accordance with the measurement method of JIS K 7210, 230°C and a 10 kg load) is 1 g/10 minutes or more and less than 80 g/10 minutes.

4. The thermoplastic elastomer composition according to claim 1 or 2, wherein the ethylene·α-olefin·non-conjugated polyene copolymer (A) is at least partially crosslinked.

5. The thermoplastic elastomer composition according to claim 1 or 2, wherein a Shore A hardness (instantaneous value) (in accordance with the measurement method of JIS K 6253, using 3 sheets each having a thickness of 2 mm stacked on top of each other) is 40 to 100.

6. A molded article comprising the thermoplastic elastomer composition according to claim 1 or 2.

7. The molded article according to claim 6, having an internal haze of 80% or less.

8. The molded article according to claim 6, having a total light transmittance of 83% or higher.

9. The molded article according to claim 6, being an automobile interior skin material.

10. The molded article according to claim 9, wherein the automobile interior skin material is an instrument panel, a door trim, an armrest or a console.

11. A decorative panel, comprising:

a molded article comprising a thermoplastic elastomer composition, the thermoplastic elastomer composition comprising

100 parts by mass of an ethylene·α-olefin·non-conjugated polyene copolymer (A),
10 to 5,000 parts by mass of a soft propylene-based copolymer (B), a melting point ($Tm_B$) of which is not observed or is lower than 115°C,
10 to 500 parts by mass of a crystalline polyolefin (C), a melting point ($Tm_C$) of which is 115°C or higher,
0 to 200 parts by mass of a softener (D), and
0.01 to 10 parts by mass of a crosslinking agent (E); and

a display device or an operation unit that is installed below the molded article.

12. A method for producing a thermoplastic elastomer composition, comprising:

a first step of dynamic crosslinking

100 parts by mass of an ethylene·$\alpha$-olefin·non-conjugated polyene copolymer (A),
0 to 5,000 parts by mass of a soft propylene-based copolymer (B), a melting point ($Tm_B$) of which is not observed or is lower than 115°C,
10 to 500 parts by mass of a crystalline polyolefin (C), a melting point ($Tm_C$) of which is 115°C or higher,
0 to 70 parts by mass of a softener (D), and
0.01 to 10 parts by mass of a crosslinking agent (E) to obtain a composition (i); and

a second step of adding 0 to 5,000 parts by mass of a soft propylene-based copolymer (B) to the composition (i), wherein a total amount of the soft propylene-based copolymer (B) added in the first step and the second step is 20 to 5,000 parts by mass, and
the soft propylene-based copolymer (B) further satisfies the following requirements (b-1) and (b-2):

(b-1) 90 to 50 mol% of a constituent unit derived from propylene, 0 to 30 mol% of a constituent unit derived from 1-butene, and 5 to 30 mol% of a constituent unit derived from ethylene, are contained;
(b-2) a molecular weight distribution (Mw/Mn) obtained by gel permeation chromatography (GPC) is in a range of 1.0 to 3.5.

13. The method for producing a thermoplastic elastomer composition according to claim 12, wherein the amount of the soft propylene-based copolymer (B) added in the first step is 0 parts by mass.

## INTERNATIONAL SEARCH REPORT

| International application No. |
|---|
| **PCT/JP2022/025043** |

### A. CLASSIFICATION OF SUBJECT MATTER

**C08L 23/16**(2006.01)i; **C08L 23/10**(2006.01)i
FI: C08L23/16; C08L23/10

According to International Patent Classification (IPC) or to both national classification and IPC

### B. FIELDS SEARCHED

Minimum documentation searched (classification system followed by classification symbols)
C08L23/16; C08L23/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2009-73912 A (MITSUI CHEMICALS INC.) 09 April 2009 (2009-04-09) | 1-12 |
|  | claims, paragraphs [0003], [0008], [0060], [0088]-[0117] |  |
| Y |  | 9-11 |
| A |  | 13 |
| X | JP 2014-181266 A (MITSUI CHEMICALS INC.) 29 September 2014 (2014-09-29) | 1-12 |
|  | claims, paragraphs [0030], [0069]-[0115] |  |
| Y |  | 9-11 |
| A |  | 13 |
| X | JP 2009-215356 A (MITSUI CHEMICALS INC.) 24 September 2009 (2009-09-24) | 1-6, 9-10, 12-13 |
|  | claims, paragraphs [0026], [0039], [0041], [0081], [0099]-[0122] |  |
| A |  | 7-8, 11 |
| X | JP 2020-117649 A (MITSUI CHEMICALS, INC.) 06 August 2020 (2020-08-06) | 1-8, 12-13 |
|  | paragraphs [0080], [0081], [0083]-[0088] |  |
| Y |  | 9-11 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 August 2022** | **13 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2022/025043**

**C.    DOCUMENTS CONSIDERED TO BE RELEVANT**

| Category* | Citation of document, with indication, where appropriate, of the relevant passages | Relevant to claim No. |
|---|---|---|
| A | JP 2019-85440 A (MITSUI CHEMICALS, INC.) 06 June 2019 (2019-06-06)<br>entire text | 1-13 |
| A | WO 2018/147391 A1 (IDEMITSU KOSAN CO., LTD.) 16 August 2018 (2018-08-16)<br>entire text | 1-13 |

Form PCT/ISA/210 (second sheet) (January 2015)

INTERNATIONAL SEARCH REPORT
Information on patent family members

International application No.

**PCT/JP2022/025043**

| Patent document cited in search report | | | Publication date (day/month/year) | Patent family member(s) | | | Publication date (day/month/year) |
|---|---|---|---|---|---|---|---|
| JP | 2009-73912 | A | 09 April 2009 | (Family: none) | | | |
| JP | 2014-181266 | A | 29 September 2014 | (Family: none) | | | |
| JP | 2009-215356 | A | 24 September 2009 | (Family: none) | | | |
| JP | 2020-117649 | A | 06 August 2020 | (Family: none) | | | |
| JP | 2019-85440 | A | 06 June 2019 | (Family: none) | | | |
| WO | 2018/147391 | A1 | 16 August 2018 | TW | 201837104 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009215356 A
- WO 2018147391 A
- JP 2009073912 A
- WO 2004087775 A
- JP 2007186664 A